# EUROPEAN PATENT SPECIFICATION

(11) **EP 3 672 416 B1**
(45) Date of publication and mention of the grant of the patent: **14.07.2021**
(21) Application number: 18742819.8
(22) Date of filing: 26.07.2018
(51) Int. Cl.: A23L 13/50, A23L 5/10, A23D 9/007, A23L 13/60, A23L 13/40, A23L 13/00, A23L 27/10, A23L 27/00, A23L 19/00, A23P 20/18, A23P 10/10, B65D 81/34, A23P 20/10, A23P 10/35, A23L 17/00

(54) **SEASONING PRODUCT**
WÜRZMITTEL-PRODUKT
PRODUIT D'ASSAISONNEMENT

(30) Priority: 25.08.2017 EP 17187920
(43) Date of publication of application: 01.07.2020
(73) Proprietor: Société des Produits Nestlé S.A., 1800 Vevey (CH)
(72) Inventor: KIM, Youngbin, 78224 Singen (DE); PERDANA, Jimmy, 78224 Singen (Hohentwiel) (DE)
(74) Representative: Dinger, Hansjörg
(86) International application number: PCT/EP2018/070263
(87) International publication number: WO 2019/038015

(56) References cited:
- EP-A1- 0 823 473
- EP-A1- 1 683 734
- WO-A1-2012/016768
- WO-A1-2012/061899
- WO-A1-2013/184983
- US-A1- 2012 128 836
- US-B1- 6 344 225
- HAROLD H TAYLOR ET AL: "Substitutability of fractionated beef tallow for other fats and oils in the food and confectionery industries: An economic evaluation", JOURNAL OF THE AMERICAN OIL CHEMISTS' SOCIETY (JA, SPRINGER, DE, vol. 53, no. 7, 1 July 1976 (1976-07-01), pages 491-495, XP008182639, ISSN: 0003-021X, DOI: 10.1007/BF02636821
- 21 May 2008 (2008-05-21), "BEEF-SUET TALLOW" IN: FOOD COMPOSITION AND NUTRITION TABLES, 7TH REVISED AND COMPLETED EDITION, CRC P. INC; MEDPHARM, STUTTGART, GERMANY, XP002765242, ISBN: 978-0-8493-4141-0 the whole document
- STEPHEN B. SMITH ET AL: "Regulation of Fat and Fatty Acid Composition in Beef Cattle", ASIAN-AUSTRALASIAN JOURNAL OF ANIMAL SCIENCES., vol. 22, no. 9, 26 August 2009 (2009-08-26), pages 1225-1233, XP055328810, KR ISSN: 1011-2367, DOI: 10.5713/ajas.2009.r.10
- ANONYMUS: "Sweet Pepper Roasted Garlic Seasoning Sheet", GNPD, September 2009 (2009-09), XP002759368,
- ANONYMUS: "Chicken with Garlic Seasoning Sheet", GNPD, April 2014 (2014-04), XP002759367,

## Description

### TECHNICAL FIELD

The invention relates to a seasoning product and to the use of the seasoning product for cooking food. The seasoning product is an assembly of a sheet of flexible burn resistant material such as a baking paper, and a composition of three layers comprising a first layer of fat, a second layer of flavorings and a third layer of an oil coating of the flavorings.

### BACKGROUND

Meat and many other foods are traditionally cooked in an oven or a pan, and often with various condiments and flavour enhancing agents to provide a tasty and appealing flavoursome cooked dish. It is well known that cooking meat can lead to a certain amount of messiness of the oven or pan and surrounding surfaces. The degree of mess that needs to be cleaned up post-cooking can vary markedly depending on the nature of the food being cooked, the temperature of cooking, and other factors. It is commonplace for the walls of the oven or the surfaces surrounding an open cooking pan to become splattered and stained with fat and oil, and cooking juices, etc. Cooking meat normally requires a considerable amount of cleaning of surfaces after the cooking process.

There is an increasing demand for food preparation in the home to be fast and convenient, and with a minimum of clean-up required after cooking.

It is also important to be able to flavour the food being cooked with flavorings (herbs, spices and other flavouring agents). Such ingredients can be added before or during cooking. They can be added individually or as a mix, but care must be taken to add the right amounts of each to give the desired flavour of cooked food. Sometimes when adding spices to meat that is being cooked or about to be cooked (e.g. by sprinkling on the meat), it is easy to add too much or too little or to add too much in some places and none in other places.

Simple cooking techniques have been developed over many years attempting to address these needs, with some success. But the typical home cook continues to search for an easy and convenient way of cooking meat and vegetables cleanly and with added flavourings and garnishes.

EP1683734 describes a seasoning product for providing flavorings from a coating material of a burn resistant material to a food material via contact. According to this patent application partially hydrogenated or hydrogenated soybean oil was used alone or in combination with cottonseed oil and/or soybean oil. The drawback of this used fat or fat/oil combination is the adherence of the herbs, spices and flavour agents to the paper and the healthy aspect for the consumer to use partially hydrogenated or hydrogenated fats. In case of a used fat/oil combination an additional prior mixing step of the fat and oil is need.

WO2012/016768 describes also a seasoning product for providing herbs, spices and flavors from a coating material of a burn resistant material to a food material via contact. According to this patent application a vegetable or animal oil with a melting point below 20°C and a vegetable or animal oil with a melting point above 20°C is used as fat layer. The vegetable or animal oil with a melting point below 20°C is sunflower oil and the vegetable or animal oil with a melting point above 20°C is palm fat. The drawback of this used fat/oil combination is the additional prior mixing step of the fat and oil, the adherence of the herbs, spices and flavour agents to the paper and the healthy aspect for the consumer to use palm fat.

Hence there is an existing need in the art and food industry to provide a better solution for a seasoning product for providing flavorings from a coating material of a burn resistant material to a food material via contact with simplified process steps and a better adherence of the flavorings to the paper and a used fat which is perceived known and still healthy for the consumer.

### SUMMARY OF THE INVENTION

The object of the present invention is to improve the state of the art or at least provide an alternative for a seasoning product for providing flavorings from a coating material of a burn resistant material to a food material via contact: i) a simple and effective way to flavour food in readiness for cooking and to cook the food so that there is a minimum of splashing and splattering of cooking juices onto walls and other surfaces, without burning of flavorings or any cooking materials, and where the addition of oil or fat by the cook for cooking the food is avoided; ii) simplify the process of manufacturing such seasoning product; iii) avoid prior mixing of a fat-oil-blend as fat layer on the burn resistant material; iv) avoid using hydrogenated or partially hydrogenated oils and fats; v) avoid using palm fat; vi) provide a fat which is better perceived by the consumer; vii) better adherence of the flavourings to the burn resistant material.

The object of the present invention is achieved by the subject matter of the independent claims. The dependent claims further develop the idea of the present invention.

Accordingly, the present invention provides in a first aspect a seasoning product with a sheet of flexible burn resistant material and a composition of three layers disposed on one face of the sheet comprising
a) animal fat, wherein the amount of fat is in the range of 15 to 30 % by weight of the composition;
b) flavorings disposed on the animal fat;
c) an oil coating of the flavorings, wherein the amount of oil is in the range of 9 to 20 % by weight of the composition;
characterized that the animal fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising of the following key fatty acids C16:0 in the range of 21 to 47 wt% (based on weight of total animal fat) and C18:0 in the range of 9 to 36 wt% (based on weight of total animal fat).

In a second aspect of the invention, there is provided a process for the preparation of a seasoning product with a sheet of flexible burn resistant material and a composition of three layers disposed on one face of the sheet comprising:
a) extending the sheet of flexible burn resistant material on a flat surface;
b) spreading animal fat on the sheet, wherein the amount of fat is in the range of 15 to 30 % by weight of the composition;
c) distributing flavourings over the animal fat;
d) oil coating of the flavourings, wherein the amount of oil is in the range of 9 to 20 % by weight of the composition;
characterized that the animal fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising of the following key fatty acids C16:0 in the range of 21 to 47 wt% (based on weight of total animal fat) and C18:0 in the range of 9 to 36 wt% (based on weight of total animal fat).

A third aspect of the invention relates to a use of a seasoning product for cooking food, where pieces of the food are placed on the seasoning product in direct contact with the composition and are cooked. Preferably, the food is meat such as beef, lamb, chicken, or fish. Alternatively, the food may be vegetables or vegetable pieces such as zucchinis, eggplant, tomatoes, or any other fleshy vegetable suitable for cooking in this manner.

It has been surprisingly found by the inventors that by using a fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising of the following key fatty acids C16:0 in the range of 21 to 47 wt% (based on weight of total animal fat) and C18:0 in the range of 9 to 36 wt% (based on weight of total animal fat) provides a beneficial seasoning product. The process to manufacture such seasoning product is simplified as no prior fat-oil-blend has been mixed in advance before spreading it on the sheet of flexible burn resistant material. The avoidance of such fat-oil- mixing in advance saves time and energy. In addition a better adherence of the flavorings on the sheet can be achieved by using the fat of this invention.

### DETAILED DESCRIPTION

The present invention pertains to a seasoning product with a sheet of flexible burn resistant material and a composition of three layers disposed on one face of the sheet comprising
a) animal fat, wherein the amount of fat is in the range of 15 to 30 % by weight of the composition;
b) flavorings disposed on the animal fat;
c) an oil coating of the flavorings, wherein the amount of oil is in the range of 9 to 20 % by weight of the composition;
characterized that the animal fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising the following key fatty acids C16:0 in the range of 21 to 47 wt% (based on weight of total animal fat) and C18:0 in the range of 9 to 36 wt% (based on weight of total animal fat).

In a further preferred embodiment the present invention pertains to a seasoning product with a sheet of flexible burn resistant material and a composition of three layers disposed on one face of the sheet comprising
a) animal fat, wherein the amount of fat is in the range of 15 to 30 % by weight of the composition;
b) flavorings disposed on the animal fat;
c) an oil coating of the flavorings, wherein the amount of oil is in the range of 9 to 20 % by weight of the composition;
characterized that the animal fat having a total saturated fat content of 52 to 69 wt% (based on weight of total animal fat) and unsaturated fatty acids including poly, trans and mono-unsaturated fatty acids in the range of 20 to 39 wt% (based on weight of total animal fat) comprising the following key fatty acids C16:0 in the range of 23 to 45 wt% (based on weight of total animal fat) and C18:0 in the range of 25.5 to 36 wt% (based on weight of total animal fat).

"A sheet of flexible burn resistant material" may be any film, foil or laminate, or any combination of such materials including, for example, paper, Teflon®, or susceptor materials, and even natural leaves such as banana leaves and algae leaves. The preferred sheet material is baking paper, which is paper typically used commercially for baking purposes. Such paper is usually a cellulose paper coated with silicon. Although this paper is more often used for oven cooking, it is suitable for use in this invention for cooking either in a pan or in an oven.

"Fat" according to this invention has a total saturated fat content of 43 to 69 wt% (based on weight of total fat) and unsaturated fatty acids including poly, trans- and mono-unsaturated fatty acids in the range of 20 to 45 wt% (based on weight of total animal fat) comprising the following key fatty acids C16:0 in the range of 21 to 47 wt% (based on weight of total animal fat) and C18:0 in the range of 9 to 36 wt% (based on weight of total animal fat) is an animal fat, preferably beef fat or fractionated chicken fat, preferably standard beef fat and/or fractionated beef fat or fractionated chicken fat, or a blend of fat mainly using standard beef fat and/or fractionated beef fat or fractionated chicken fat, more preferably the used fat is standard beef fat and/or fractionated beef fat or fractionated chicken fat alone, more preferably the animal fat is standard beef fat and/or fractionated beef fat, more preferably beef fat, most preferably fractionated beef fat. In a preferred embodiment, the seasoning product of the present invention does not include hydrogenated and/or partially hydrogenated fat. In a further embodiment, the composition comprises fat in an amount in the range of 15 to 30% (by weight of the total composition), preferably between 15 to 25%, preferably between 17 to 23% (by weight of the total composition). In an embodiment C16:0 is Palmitic acid; C18:0 is Stearic acid; C18:1 is Oleic acid or Vaccenic acid or combinations thereof; C18:2 is Linoleic acid. In a further embodiment total saturated fat content is 50 to 69 wt% (based on weight of total animal fat), preferably 52 to 69 wt%, preferably 54 to 69 wt% (based on weight of total animal fat). In a further embodiment unsaturated fatty acids including poly, trans- and mono-unsaturated fatty acids in the range of 20 to 42 wt% (based on weight of total animal fat), preferably 20 to 38 wt%, preferably 20 to 37 wt%, preferably 20 to 35 wt%, preferably 20 to 32 wt% (based on weight of total animal fat). In a further embodiment C16:0 is in the range of 22 to 47 wt% (based on weight of total animal fat), preferably 22 to 45 wt%, preferably 23 to 47 wt%, preferably 23 to 45 wt%, preferably 26 to 36 wt% (based on weight of total animal fat). In a further embodiment C18:0 is in the range of 16 to 36 wt% (based on weight of total animal fat), preferably 24 to 36 wt%, preferably 25.5 to 36 wt% (based on weight of total animal fat). In a further embodiment C18:1 is in the range of 17 to 36 wt% (based on weight of total animal fat), preferably 17 to 33 wt%, preferably 17 to 32 wt%, preferably 17 to 27 wt%, preferably 17 to 24 wt% (based on weight of total animal fat). In a further embodiment C18:2 is in the range of 0.6 to 12 wt% (based on weight of total animal fat), preferably 0.6 to 10 wt%, preferably 1.4 to 10 wt%, preferably 1.4 to 6 wt% (based on weight of total animal fat). In an embodiment the melting point of the fat is between 40 to 60°C, preferably between 42 to 60°C, more preferably between 43 to 55°C. In an embodiment the fat is a 100% non-hydrogenated fat. In an embodiment the fat does not include palm fat. In an embodiment the fat is not hydrogenated.

The term "flavorings" in the context of the composition means flavoring agents, taste enhancing ingredients, herbs, spices, vegetables, meat and fish components (in wet or powder form). Taste enhancing ingredients may be provided by monosodium glutamate (MSG), disodium ribonucleotides, vegetable protein hydrolysates or yeast extracts or combination thereof etc. Flavoring agents can include salt, parsley, rosemary, marjoram, dill, tarragon, coriander, ingwer, lemongrass, curcuma, chili, ginger, paprika, mustard, garlic, onion, turmeric, tomato, coconut milk, cheese, oregano, thyme, basil, chillies, paprika, tomato, pimento, jalapeno pepper, white pepper powder and black pepper. Salt refers to any suitable alkali metal salt or mixture thereof. In one embodiment the salt used in the composition is typically, but not limited to sodium chloride. For example, potassium chloride may be used or any low-sodium product having a taste impression of sodium chloride may be used, as long as the taste in the end formulation is acceptable. In a further embodiment, the composition comprises flavorings in an amount in the range of 50 to 75% (by weight of the composition), preferably between 55 to 75%, preferably between 60 to 75%, preferably between 65 to 72% (by weight of the composition).

In a preferred embodiment, the oil is a vegetable oil or animal oil, preferably vegetable oil. Preferably, the oil is selected from the group consisting of sunflower oil, rape seed oil, cotton seed oil, peanut oil, soya oil, olive oil, coconut oil or a combination thereof; more preferably sunflower oil. In a further embodiment, the composition comprises oil in an amount in the range of 8 to 20% (by weight of the composition), preferably between 10 to 17%, preferably between 11 to 15% (by weight of the composition).

Oil of the present seasoning product is liquid at a room temperature of 25°C, preferably at a room temperature of 22°C. Fat of the present seasoning product is solid at a room temperature of 25°C, preferably at a room temperature of 22°C. In an embodiment the composition of the three layers has to be solid at room temperature of 22°C.

The composition may also comprise 0.01 to 5 % by weight of a monoglyceride, sterol, or lecithin. Monoglyceride, sterol, or lecithin may be included as a stabilizer and emulsifier to control and improve product stability against temperature fluctuations after production and use in different climatic conditions.

The invention provides a simple and effective way to cook food with a minimum of splashing and splattering of cooking juices onto walls and other surfaces and with a coating of flavorings without burning them or any cooking materials.

The consumer can pan fry or oven cook using a conventional baking paper coated with fat, flavorings and an oil coating of the flavorings. An important advantage is that no additional fat or oil needs to be added to the pan or oven dish. In other words, the fat used for coating the baking paper with flavorings have a dual purpose, i.e. to adhere the flavorings to the paper and to provide the fat or oil needed for cooking.

Several additional benefits are provided by this invention:
- Adherence of the flavorings to the sheet until cooking starts
- the flavorings will not burn during cooking
- the food (especially beef, lamb, chicken, or fish meat) will preserve its natural juiciness as loss of moisture is markedly reduced by the sheet covering
- excess fat in the pan or oven dish is avoided so that the splashing of cooking juices on walls and cooking surfaces is dramatically reduced or avoided altogether, and post-cooking cleaning is minimised

The fat applied to the sheet has two important functions. The first is to maintain the flexibility of the sheet and ensure that the flavorings adhere to the sheet during handling, transportation, preparation and cooking. The second is to provide the fat for cooking so that no additional fat or oil needs to be added by the cook.

The sheet may be any size suitable for the cooking operation, and may be adapted to the local commonly used individual sizes of meat, which is typically 100 to 300 g in most countries.

The invention also relates to a process of a seasoning product with a sheet of flexible burn resistant material and a composition of three layers disposed on one face of the sheet, which may be a continuous process in the industrial setting, where:
- the sheet is extended on a flat surface,
- an animal fat is spread on the sheet, wherein the amount of fat is in the range of 15 to 30 % by weight of the composition,
- the flavorings are distributed over the animal fat coated sheet,
- the flavorings are coated with oil, optionally containing flavoring substances dispersed or solubilized within the oil, wherein the amount of oil is in the range of 9 to 20 % by weight of the composition,
characterized that the fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising the following key fatty acids C16:0 in the range of 21 to 47 wt% (based on weight of total animal fat) and C18:0 in the range of 9 to 36 wt% (based on weight of total animal fat).

In a typical process, the sheet is extended on a flat surface and an fat is spread on the sheet at a temperature above the melting point of the fat. Just prior to the liquid fat cooling below its melting temperature, a pre-mix of flavorings is evenly applied across the surface of the sheet. The flavorings are coated with oil to enhance their adherence to the sheet. Gentle pressure can be applied to the sheet to achieve close contact between the sticky fat and any dry pre-mix components. The sheet can be cut into smaller segments to fit the size of typical consumer meat portions.

The invention also relates to the use of the seasoning product for cooking food in a pan or an oven. The food is preferably meat, which may be beef, lamb, chicken, or fish, or any other eat suitable for cooking in this way. The pieces of meat are placed on the seasoning product in direct contact with the composition and are then cooked in a pan or an oven, or any other suitable cooking device. The consumer places the meat portion on the coated surface of the sheet. The sheet can be folded over to cover most or substantially all of the portion. The covered meat is placed on or in a cooking device, such as a pre-heated pan at medium heat or preheated conventional oven (between 150 and 220 °C). The cooking process is normally carried out during 5 to 7 minutes on each side, depending on the type and cut of meat. The food is ready to serve by removing the sheet.

Vegetables may also be cooked using the seasoning product of this invention. Examples include zucchinis and eggplant (aubergine). Any protein/starch food matrix having a water activity less than 0.7 may be suitable, for example, tofu and cheese.

One product possibility is a package comprising 4 units of sheet. The size of each sheet may depend on the size of the meat portions and will normally be in the range 15 to 20 cm. Each sheet will typically have 5 to 8 g total weight of fat, flavorings and oil coating.

### EXAMPLES

The invention is further described with reference to the following examples. It is to be appreciated that the examples do not in any way limit the invention.

### Examples 1-8:

Different kind of fats have been tested. Therefore the baking paper is extended on a flat surface and a fat is spread on the sheet at a temperature above the melting point of the fat. Just prior to the liquid fat cooling below its melting temperature, a pre-mix of flavorings is evenly applied across the surface of the sheet. The flavorings maybe coated with oil to enhance their adherence to the sheet. After the trials the sheets were weighted and weighted again after all the loose flavorings were shaken off the sheets. The average weight are measured as an average of 5 sheets. The amount of fat and oil used within our trials are always the same. In all the trials mentioned below, the weight of the paper was 1.40 g and the amount of total fat/oil used was 1.90 g. So in total the sheet with paper and fat/oil has a weight of 3.30 g without any flavorings. The table shows the average weight of the sheets after the flavorings has been shaken off.

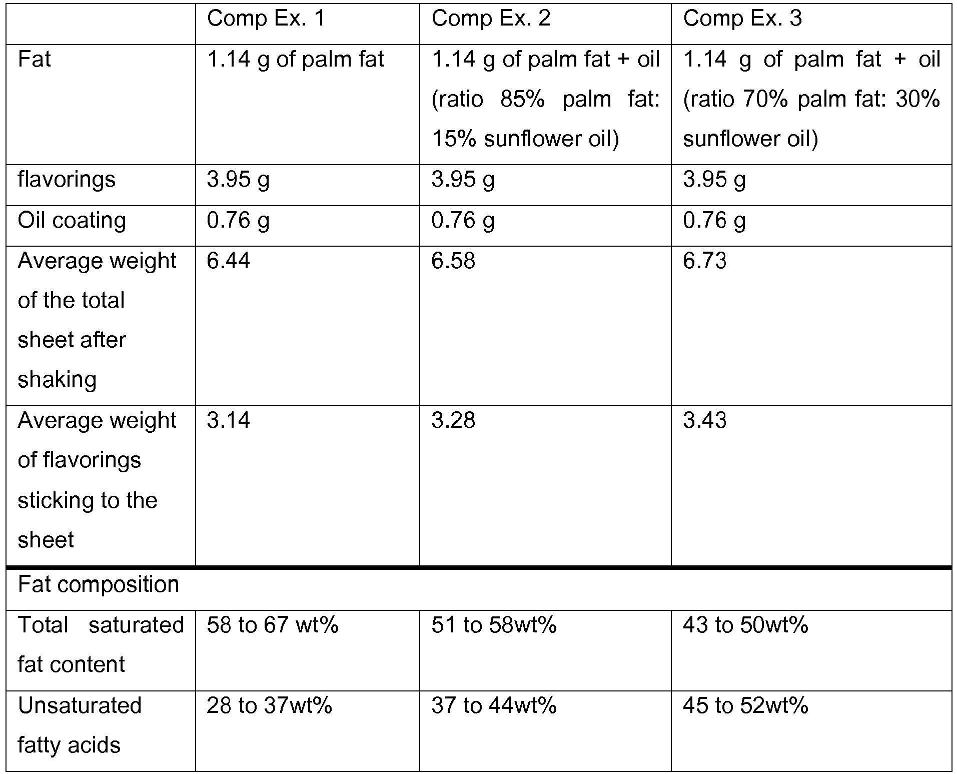

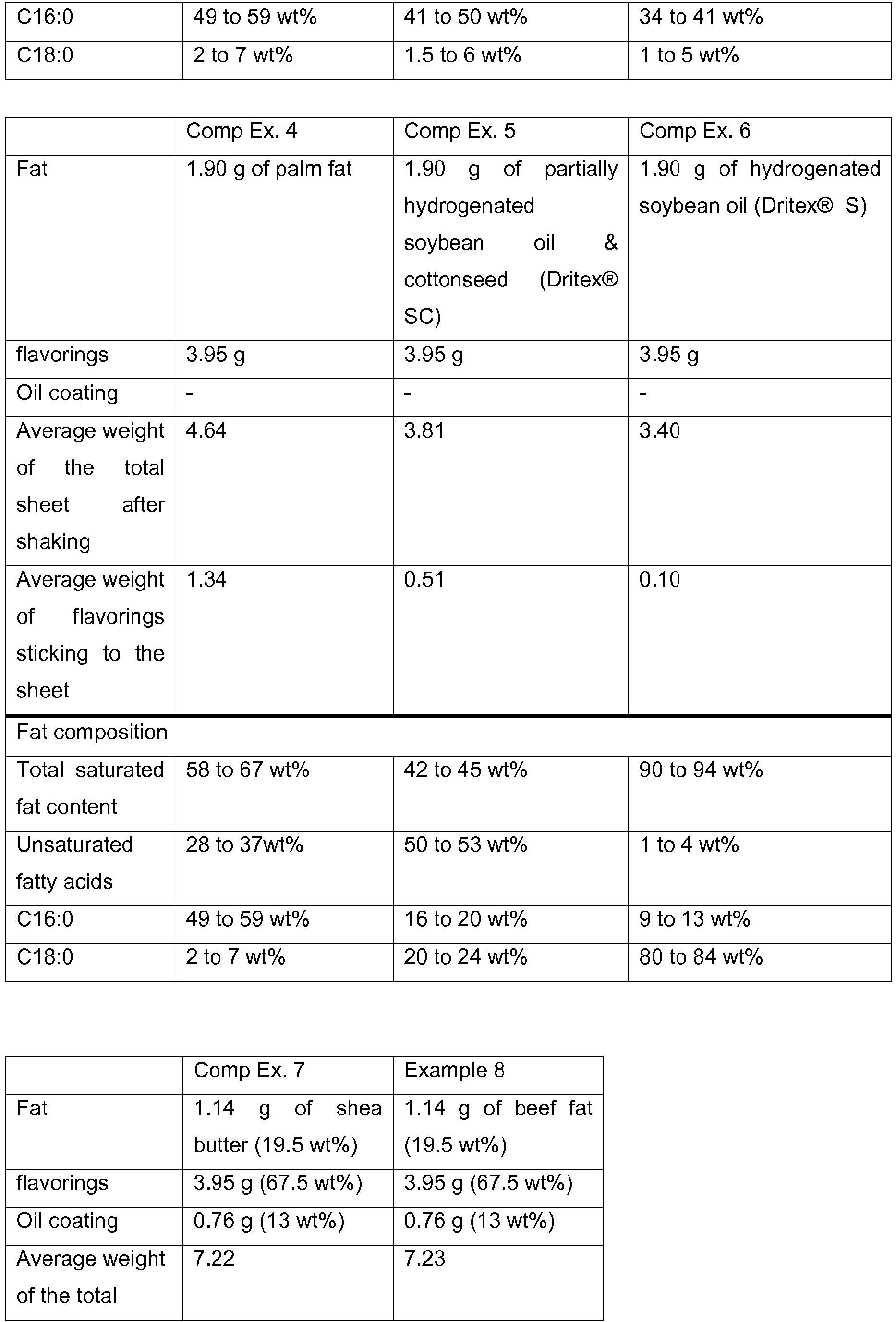

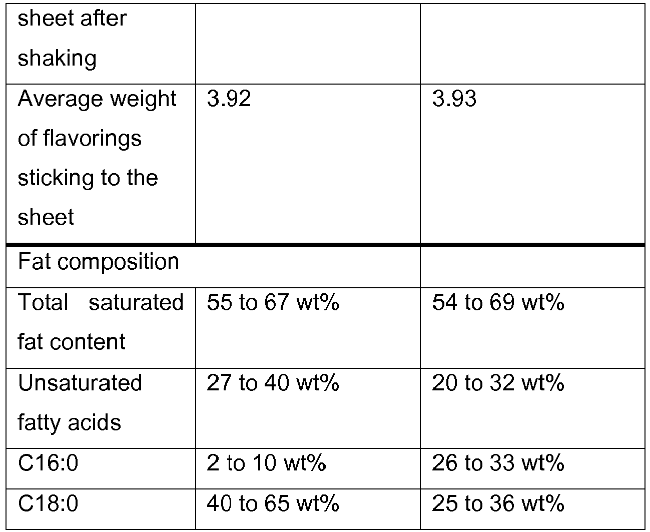

The weight of the sheets shows clearly that more flavorings were sticking to the sheet in the case of using an oil coating. It is shown that the fat as described within this invention as example 8 results in the best adherence of the flavorings. This is important as due to transportation or handling through the consumer it should be avoided, that the flavorings are falling off the sheet. In addition while example 8 shows the best adherence of the flavorings to the sheet the process is simplified as no fat/oil blend has to be mixed prior the fat is applied to the sheet as within examples 2, 3 and 5 where at least examples 2 and 3 showed also a good adherence of the flavorings. Due to oiling out of the seasoning product an oil ratio higher as 34% of a fat/oil blend can not be used.

### Example 9 - Recipes

The recipes below may be used for cooking beef or chicken, or any other suitable meat or food, depending on consumer preference.

| **Recipe** | **Component** | **Amount wt %** |
|---|---|---|
| Provencale | • fat as example 8 | 24 |
| | • flavourings (salt, yeast extract, oregano, basil, tomato granules, thyme, black pepper, marjoram) | 64 |
| | • oil coating | 12 |
| Garlic | • fat as example 8 | 17 |
| | • flavourings (salt, garlic powder, onion powder, dehydrated garlic pieces, parsley) | 67 |
| | • oil coating | 16 |
| Tomato | • fat as example 8 | 18 |
| | • flavourings (salt, tomato pieces, marjoram, oregano, parsley) | 69 |
| | • oil coating | 13 |
| Paprika | • fat as example 8 | 20 |
| | • flavourings (salt, bell pepper powder & pieces, parsley) | 68 |
| | • oil coating | 12 |

### Example 10 - General Method

The cook takes a portion of food and places it on the seasoning product according to example 8. The food portion is covered on both sides with the sheet or loosely wrapped in the sheet. The seasoning product containing the food portion is placed on a pre-heated pan and cooked for the required time period, and on each side if appropriate, at moderate temperature. Low temperature cooking avoids fast protein degradation and improves palatability, taste perception and natural bite. The food portion is ready to serve by removing from the sheet. The ingredients of the composition give flavour to the cooked food, and the sheet protects the food from drying out ensuring natural juiciness. Flavours are better perceived due natural preserved juiciness and palatability is enhanced.

The basic method for cooking meat comprises the following steps:
1. Place a clean pan on the heating station (e.g. induction, electric or gas hob) at, for example, 50% of the maximum heating capacity. No need to add oil or fat.
2. Open the seasoning product sheet.
3. Place the meat on the open sheet and fold or wrap the sheet around the meat.
4. Place the wrapped sheet on the pre-heated pan.
5. Cook for several minutes each side.
6. Remove from the pan.
7. Discard the sheet before eating.

## Claims

1. A seasoning product with a sheet of flexible burn resistant material and a composition of three layers disposed on one face of the sheet comprising
a) animal fat, wherein the amount of fat is in the range of 15 to 30 % by weight of the composition;
b) flavorings disposed on the animal fat;
c) an oil coating of the flavorings, wherein the amount of oil is in the range of 9 to 20 % by weight of the composition;
characterized that the animal fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising the following key fatty acids C16:0 in the range of 21 to 47 wt% (based on weight of total animal fat) and C18:0 in the range of 9 to 36 wt% (based on weight of total animal fat).

2. A seasoning product as claimed in claim 1, wherein the sheet is baking paper.

3. A seasoning product as claimed in any one of claims 1 to 2, wherein the fat is beef fat.

4. A seasoning product as claimed in any one of claims 1 to 3, wherein the fat further comprises the following key fatty acids C18:1 in the range of 17 to 36 wt% (based on weight of total animal fat) and C18:2 in the range of 0.6 to 12 wt% (based on weight of total animal fat).

5. A seasoning product as claimed in any one of claims 1 to 4, wherein the oil is selected from the group consisting of sunflower oil, rape seed oil, cotton seed oil, peanut oil, soya oil, olive oil, coconut oil or any combination thereof.

6. A seasoning product as claimed in any one of claims 1 to 5, wherein the amount of flavorings is in the range of 50 to 75 % by weight of the composition.

7. A seasoning product as claimed in any one of claims 1 to 6, wherein the flavorings are selected from the group consisting of salt, parsley, rosemary, pepper, chives, yeast extract, oregano, basil, tomato granules, tomato pieces, thyme, black pepper, marjoram, garlic powder, onion powder, dehydrated garlic pieces, oregano bell pepper powder or combinations thereof.

8. A seasoning product as claimed in any one of claims 1 to 7 which does not include a fat-oil-blend as fat layer on the burn resistant material.

9. A seasoning product as claimed in any one of claims 1 to 8 which does not include vegetable fat or hydrogenated vegetable fat.

10. A seasoning product as claimed in any one of claims 1 to 9 which does not include palm fat.

11. A process for the preparation of a seasoning product as claimed in any one of claims 1 to 10 comprising:
a) extending the sheet of flexible burn resistant material on a flat surface;
b) spreading animal fat on one face of the sheet, wherein the amount of fat is in the range of 15 to 30 % by weight of the composition;
c) distributing flavourings over the animal fat;
d) oil coating of the flavourings, wherein the amount of oil is in the range of 9 to 20 % by weight of the composition;
characterized that the animal fat having a total saturated fat content of 43 to 69 wt% (based on weight of total animal fat) and unsaturated fatty acids including poly, trans and mono-unsaturated fatty acids in the range of 20 to 45 wt% (based on weight of total animal fat) comprising the following key fatty acids C16:0 in the range of 21 to 47 wt% (based on weight of total animal fat) and C18:0 in the range of 9 to 36 wt% (based on weight of total animal fat).

12. The use of a seasoning product as claimed in any of claims 1 to 10 for cooking meat or vegetables, where pieces of the meat or vegetables are placed on the seasoning product in direct contact with the composition and are cooked.

13. A method for cooking meat or vegetables, where pieces of the meat or vegetables are placed on the seasoning product as claimed in any of claims 1 to 10 in direct contact with the composition and are cooked.

## Patentansprüche

1. Würzmittelprodukt mit einem Blatt aus flexiblem, verbrennungsbeständigem Material und einer Zusammensetzung aus drei Schichten, die auf einer Fläche des Blatts angeordnet sind, umfassend:
a) tierisches Fett, wobei die Menge an Fett im Bereich von 15 bis 30 Gew.-% der Zusammensetzung liegt;
b) auf dem tierischen Fett angeordnete Geschmacksstoffe;
c) eine Ölbeschichtung der Geschmacksstoffe, wobei die Menge an Öl im Bereich von 9 bis 20 Gew.-% der Zusammensetzung liegt;
**dadurch gekennzeichnet, dass** das tierische Fett einen Gesamtgehalt an gesättigtem Fett von 43 bis 69 Gew.-% (bezogen auf das Gewicht des gesamten tierischen Fetts) und an ungesättigten Fettsäuren, einschließlich mehrfach ungesättigter Fettsäuren, ungesättigter trans-Fettsäuren und einfach ungesättigter Fettsäuren, im Bereich von 20 bis 45 Gew.-% (bezogen auf das Gewicht des gesamten tierischen Fetts) aufweist und die folgenden Hauptfettsäuren C16:0 im Bereich von 21 bis 47 Gew.-% (bezogen auf das Gewicht des gesamten tierischen Fetts) und C18:0 im Bereich von 9 bis 36 Gew.-% (bezogen auf das Gewicht des gesamten tierischen Fetts) umfasst.

2. Würzmittelprodukt nach Anspruch 1, wobei es sich bei dem Blatt um Backpapier handelt.

3. Würzmittelprodukt nach einem der Ansprüche 1 bis 2, wobei es sich bei dem Fett um Rinderfett handelt.

4. Würzmittelprodukt nach einem der Ansprüche 1 bis 3, wobei das Fett ferner die folgenden Hauptfettsäuren C18:1 im Bereich von 17 bis 36 Gew.-% (bezogen auf das Gewicht des gesamten tierischen Fetts) und C18:2 im Bereich von 0,6 bis 12 Gew.-% (bezogen auf das Gewicht des gesamten tierischen Fetts) umfasst.

5. Würzmittelprodukt nach einem der Ansprüche 1 bis 4, wobei das Öl ausgewählt ist aus der Gruppe bestehend aus Sonnenblumenöl, Rapsöl, Baumwollsamenöl, Erdnussöl, Sojaöl, Olivenöl, Kokosnussöl oder einer beliebigen Kombination davon.

6. Würzmittelprodukt nach einem der Ansprüche 1 bis 5, wobei die Menge an Geschmacksstoffen im Bereich von 50 bis 75 Gew.-% der Zusammensetzung liegt.

7. Würzmittelprodukt nach einem der Ansprüche 1 bis 6, wobei die Geschmacksstoffe ausgewählt sind aus der Gruppe bestehend aus Salz, Petersilie, Rosmarin, Pfeffer, Schnittlauch, Hefeextrakt, Oregano, Basilikum, Tomatengranulat, Tomatenstücken, Thymian, schwarzem Pfeffer, Majoran, Knoblauchpulver, Zwiebelpulver, getrockneten Knoblauchstücken, Oregano-Paprikapulver oder Kombinationen davon.

8. Würzmittelprodukt nach einem der Ansprüche 1 bis 7, das keine Fett-Öl-Mischung als Fettschicht auf dem verbrennungsbeständigen Material enthält.

9. Würzmittelprodukt nach einem der Ansprüche 1 bis 8, das kein pflanzliches Fett oder gehärtetes pflanzliches Fett beinhaltet.

10. Würzmittelprodukt nach einem der Ansprüche 1 bis 9, das kein Palmfett beinhaltet.

11. Verfahren zum Herstellen eines Würzmittelprodukt nach einem der Ansprüche 1 bis 10, umfassend:
a) Ausbreiten des Blatts aus flexiblem, verbrennungsbeständigem Material auf einer ebenen Oberfläche;
b) Verteilen von tierischem Fett auf einer Seite des Blatts, wobei die Menge an Fett im Bereich von 15 bis 30 Gew.-% der Zusammensetzung liegt;
c) Verteilen der Geschmacksstoffe auf dem tierischen Fett;
d) Ölbeschichtung der Geschmacksstoffe, wobei die Menge an Öl im Bereich von 9 bis 20 Gew.-% der Zusammensetzung liegt;
**dadurch gekennzeichnet, dass** das tierische Fett einen Gesamtgehalt an gesättigtem Fett von 43 bis 69 Gew.-% (bezogen auf das Gewicht des gesamten tierischen Fetts) und an ungesättigten Fettsäuren, einschließlich mehrfach ungesättigter Fettsäuren, ungesättigter trans-Fettsäuren und einfach ungesättigter Fettsäuren, im Bereich von 20 bis 45 Gew.-% (bezogen auf das Gewicht des gesamten tierischen Fetts) aufweist und die folgenden Hauptfettsäuren C16:0 im Bereich von 21 bis 47 Gew.-% (bezogen auf das Gewicht des gesamten tierischen Fetts) und C18:0 im Bereich von 9 bis 36 Gew.-% (bezogen auf das Gewicht des gesamten tierischen Fetts) umfasst.

12. Verwendung eines Würzmittelprodukts nach einem der Ansprüche 1 bis 10 zum Garen von Fleisch oder Gemüse, wobei Stücke von dem Fleisch oder Gemüse auf das Würzmittelprodukt in direktem Kontakt mit der Zusammensetzung gegeben und gegart werden.

13. Verfahren zum Garen von Fleisch oder Gemüse, wobei Stücke von dem Fleisch oder Gemüse auf das Würzmittelprodukt nach einem der Ansprüche 1 bis 10 in direktem Kontakt mit der Zusammensetzung gegeben und gegart werden.

## Revendications

1. Produit d'assaisonnement avec une feuille de matériau souple résistant aux brûlures et une composition de trois couches disposées sur une face de la feuille comprenant
a) de la matière grasse animale, dans lequel la quantité de matière grasse est dans la plage de 15 à 30 % en poids de la composition ;
b) des arômes disposés sur la matière grasse animale ;
c) un revêtement d'huile des arômes, dans lequel la quantité d'huile est dans la plage de 9 à 20 % en poids de la composition ;
**caractérisé en ce que** la matière grasse animale a une teneur totale en matières grasses saturées de 43 à 69 % en poids (sur la base du poids de la matière grasse animale totale) et des acides gras insaturés incluant des acides gras poly, trans et mono-insaturés dans la plage de 20 à 45 % en poids (sur la base du poids de la matière grasse animale totale) comprenant les acides gras essentiels suivants C16:0 dans la plage de 21 à 47 % en poids (sur la base du poids de la matière grasse animale totale) et C18:0 dans la plage de 9 à 36 % en poids (sur la base du poids de la matière grasse animale totale).

2. Produit d'assaisonnement tel que revendiqué dans la revendication 1, dans lequel la feuille est du papier de cuisson.

3. Produit d'assaisonnement tel que revendiqué dans l'une quelconque des revendications 1 à 2, dans lequel la matière grasse est de la graisse de boeuf.

4. Produit d'assaisonnement tel que revendiqué dans l'une quelconque des revendications 1 à 3, dans lequel la matière grasse comprend en outre les acides gras essentiels suivants C18:1 dans la plage de 17 à 36 % en poids (sur la base du poids de la matière grasse animale totale) et C18:2 dans la plage de 0,6 à 12 % en poids (sur la base du poids de la matière grasse animale totale).

5. Produit d'assaisonnement tel que revendiqué dans l'une quelconque des revendications 1 à 4, dans lequel l'huile est choisie dans le groupe constitué d'huile de tournesol, huile de graines de colza, huile de graines de coton, huile d'arachide, huile de soja, huile d'olive, huile de coco ou n'importe quelle combinaison de celles-ci.

6. Produit d'assaisonnement tel que revendiqué dans l'une quelconque des revendications 1 à 5, dans lequel la quantité d'arômes est dans la plage de 50 à 75 % en poids de la composition.

7. Produit d'assaisonnement tel que revendiqué dans l'une quelconque des revendications 1 à 6, dans lequel les arômes sont choisis dans le groupe constitué de sel, persil, romarin, poivron, ciboulette, extrait de levure, origan, basilic, granules de tomate, morceaux de tomate, thym, poivre noir, marjolaine, poudre d'ail, poudre d'oignon, morceaux d'ail déshydratés, poudre d'origan et de poivron ou des combinaisons de ceux-ci.

8. Produit d'assaisonnement tel que revendiqué dans l'une quelconque des revendications 1 à 7 qui n'inclut pas de mélange matière grasse-huile en guise de couche de matière grasse sur le matériau résistant aux brûlures.

9. Produit d'assaisonnement tel que revendiqué dans l'une quelconque des revendications 1 à 8 qui n'inclut pas de matière grasse végétale ou de matière grasse végétale hydrogénée.

10. Produit d'assaisonnement tel que revendiqué dans l'une quelconque des revendications 1 à 9 qui n'inclut pas de matière grasse de palme.

11. Processus de préparation d'un produit d'assaisonnement tel que revendiqué dans l'une quelconque des revendications 1 à 10, comprenant :
a) le fait d'étendre la feuille de matériau souple résistant aux brûlures sur une surface plate ;
b) l'étalement de matière grasse animale sur une face de la feuille, dans lequel la quantité de matière grasse est dans la plage de 15 à 30 % en poids de la composition ;
c) la distribution d'arômes par-dessus la matière grasse animale ;
d) le revêtement d'huile des arômes, dans lequel la quantité d'huile est dans la plage de 9 à 20 % en poids de la composition ;
**caractérisé en ce que** la matière grasse animale a une teneur totale en matières grasses saturées de 43 à 69 % en poids (sur la base du poids de la matière grasse animale totale) et des acides gras insaturés incluant des acides gras poly, trans et mono-insaturés dans la plage de 20 à 45 % en poids (sur la base du poids de la matière grasse animale totale) comprenant les acides gras essentiels suivants C16:0 dans la plage de 21 à 47 % en poids (sur la base du poids de la matière grasse animale totale) et C18:0 dans la plage de 9 à 36 % en poids (sur la base du poids de la matière grasse animale totale).

12. Utilisation d'un produit d'assaisonnement tel que revendiqué dans l'une quelconque des revendications 1 à 10 pour la cuisson de viande ou de légumes, où des morceaux de la viande ou des légumes sont placés sur le produit d'assaisonnement en contact direct avec la composition et sont cuits.

13. Procédé de cuisson de viande ou de légumes, où des morceaux de la viande ou des légumes sont placés sur le produit d'assaisonnement selon l'une quelconque des revendications 1 à 10 en contact direct avec la composition et sont cuits.
